# EUROPEAN PATENT APPLICATION

(11) **EP 3 663 652 A1**
(43) Date of publication of application: **10.06.2020**
(21) Application number: 18842331.3
(22) Date of filing: 30.07.2018
(51) Int. Cl.: F24D 15/04

(54) **LOCAL SYSTEM FOR ENERGY PRODUCTION AND MANAGEMENT AND METHOD FOR OPERATING SAID SYSTEM**

(30) Priority: 04.08.2017 ES 201731013
(71) Applicant: Ortega Amorin, Juan José, 28003 Madrid (ES)
(72) Inventor: Ortega Amorin, Juan José, 28003 Madrid (ES)
(74) Representative: Del Valle Valiente, Sonia
(86) International application number: PCT/ES2018/070540
(87) International publication number: WO 2019/025657

(57) **Abstract**

The invention relates to a local system (1) for energy production and management, which comprises a combustion-based electrical generator with an electric heat pump for generating cold and heat and for supplying electricity, cold, heat and domestic hot water (DHW), and a photovoltaic generator for harnessing solar energy, together with a control unit for managing thermal and electrical loads of the assembly by fully harnessing renewable energies. The invention also relates to a method for operating the system and which manages the control unit.

## Description

### DESCRIPTION

### OBJECT OF THE INVENTION

The present invention relates to a local system for energy production and management, and to a method for operating said system. It is comprised in the technical sector of energy management.

### BACKGROUND OF THE INVENTION

Local energy consumption, understanding as local that which corresponds to an individual consumer or to a limited group of consumers or hotels, non-industrial consumers in general, fundamentally corresponds with feeding electrical energy receivers, and for climate control (cold and heat) and the generation of domestic hot water.

The energy supply fundamentally comes from the power grid or from fuels, although the use of certain renewable energies, such as photovoltaic energy, is on the rise.

The use of the electrical energy in these local consumers, from the grid or photovoltaic energy, for example, is used in feeding electric receivers, whereas the use of fossil energies is implemented by burning fuels, usually to obtain thermal energy for heating water, for feeding domestic hot water, or for heating rooms by means of radiators.

Certain local consumers are increasingly implanting another type of supplies, mainly photovoltaic energy generators or by means of cogeneration, where a generator is moved by a heat engine fed with fuels, recovering heat from the combustion for heating or for cold (by absorption).

However, the existing systems have the limitation of underusing the energy obtainable from combustion in local installations.

This drawback is rectified by the use of the system and method of the invention.

### DESCRIPTION OF THE INVENTION

The local system for energy production and management of the invention is of the type applied to a local consumer, understanding as such a single consumer or limited group of non-industrial consumers, consumer associations or hotels, of electricity, cold and heat with an annual demand with an approximate power to heat ratio of 1 to 2 or higher.

According to the invention, the system comprises:
- at least one generator set (using gas, diesel, gasoline or any fuel) for supplying electrical energy, connected to a local distribution network for supplying to local electrical loads belonging to the premises of the consumer or consumer association, which has already been defined as being a single consumer or limited group of non-industrial consumers or hotels,
- a heat recovery unit coupled to the generator set, and connected to a local climate control circuit for supplying recovered heat for the purpose of climate control of the premises and of feeding other thermal receivers associated with said premises,
- at least one electric heat pump fed by the generator set, for generating additional cold or heat from the electricity generated by the generator set, and connected to the local climate control circuit for supplying heat or cold for the purpose of climate control of the premises and of feeding other associated thermal receivers,
- a photovoltaic generator connected to the domestic electrical energy distribution network,
   and
- a control unit associated with sensors of electrical load and temperature for managing the operation of the generator set, heat pump and feed coming from the photovoltaic generator depending on the simultaneous requirements of the local electrical loads connected to the domestic electrical energy distribution network and of climate control of the premises and of the local thermal receivers connected to the local climate control circuit.

Basically, what the invention proposes is a combustion-based electrical (gas, diesel, etc.) generator with an electric heat pump for generating cold and heat and for supplying electricity, cold, heat and domestic hot water (DHW), and a photovoltaic generator for harnessing solar energy, together with a control unit for managing thermal and electrical loads of the assembly by fully harnessing renewable energies.

The operation of the system of the invention is performed by means of the method for operating the local system for energy production and management of the invention, comprising the following steps implemented in a control unit:
- continuously monitoring the local demands for electrical energy of local electrical loads connected to a domestic electrical energy distribution network, and for thermal energy for climate control of premises or for the supply to thermal receivers associated with said premises through a local climate control circuit, by means of sensors connected to said control unit,
- connecting a photovoltaic generator to the domestic electrical energy distribution network for first supplying electrical energy to cover the demand for electrical energy detected,
- starting up a generator set in the event of the control unit detecting that the demand for electrical energy detected cannot be covered with the energy supplied from said photovoltaic generator, connecting said generator set to the domestic distribution network, and feeding said generator set for generating enough energy to cover the demand detected and not covered by the photovoltaic generator,
- determining if there is a demand for cold or for heat,
- in the event of a demand for cold, feeding a heat pump, connectable to a local climate control circuit for supplying the cold generated to the premises for the purpose of climate control, from the photovoltaic generator and also from the generator set in the event that the energy supplied from the photovoltaic generator is not enough for said heat pump to generate the cold needed for covering said demand for cold,
- in the event of a demand for heat, feeding the heat pump from the photovoltaic generator,
   and
- in the event that the energy supplied from the photovoltaic generator is not enough, connecting the generator set, after the startup thereof, where appropriate, to the heat pump recovering heat for climate control through a heat recovery unit coupled to the generator set and connected to the local climate control circuit and to the thermal receivers, and feeding the generator set to the extent that is sufficient to cover the demand for electrical energy for the heat pump to generate the heat demanded minus the heat recovered by the heat recovery unit.

In the described method, it will be understood that there is a demand for cold or for heat, in addition to whether a need for climate control of the premises is detected, whether there is a photovoltaic production excess and cold or heat can be accumulated in cold or heat accumulator tanks associated with the heat pump, so as to recover it at the appropriate times of low photovoltaic generation, for example at night.

With this configuration and method of operating, better harnessing of energy from combustion is achieved, because using fuels to burn them is not cost-effective since the performance of a gas generator, for example, is around 90 % and electricity is obtained at 30 %, heat at 60 %, and losses at 10 %, and what the invention does is use that 30 % of electricity with a heat pump with a performance of COP3 or higher (with certain brands and situations exceeding COP5) for obtaining 90 % more heat, total: 150 %. The invention therefore configures an optimal model for harnessing photovoltaic energy and combustion, as the tendency at present is to separate them, which involves overcoming a current widespread technical prejudice. In the winter, there is an excess demand for heat which, if harnessed with a single generator set generating heat, there would be an excess electric generation (since that 30 % performance in electrical production of the generator set would not be harnessed), and in the summer it would be operating without harnessing the sun for generating electricity primarily and with the drawback of noise or vibrations at night.

The system and method of the invention are therefore configured as ideal for users such as owner or consumer associations, which most of the time are non-profit, that can be connected to the grid or be installed isolated from the grid.

### DESCRIPTION OF THE DRAWINGS

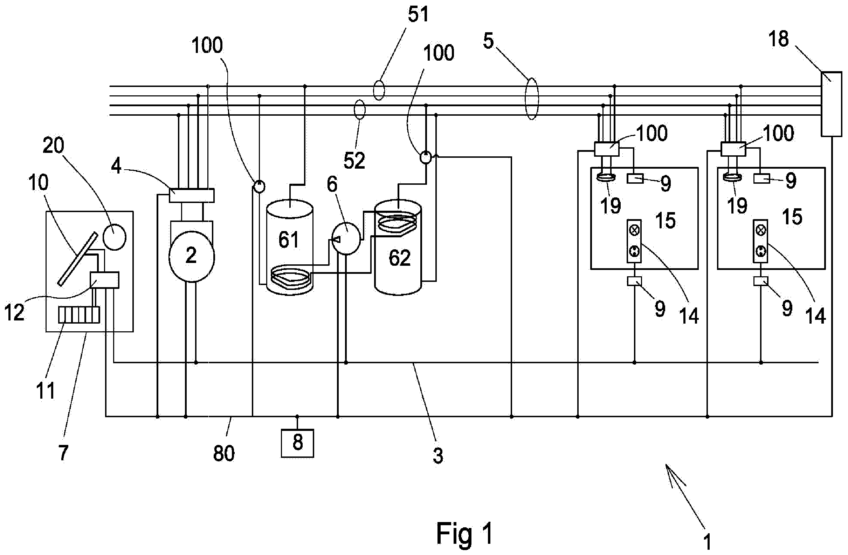

Figure 1 shows a concept diagram of the system of the invention.

### PREFERRED EMBODIMENT OF THE INVENTION

The local system (1) for energy production and management of the invention is of the type applied to a consumer or limited group of non-industrial consumers or hotels, and according to the invention comprises:
- at least one generator set (2) for supplying electrical energy, connected to a local electrical energy distribution network (3) for supplying to local electrical loads (14) (power plugs, lighting, etc.) belonging to the premises (15) of the consumer or consumer association,
- a heat recovery unit (4) coupled to the generator set (2), and connected to a local climate control circuit (5) for supplying recovered heat for the purpose of climate control of the premises (15) and of feeding other thermal receivers associated with said premises (15),
- at least one electric heat pump (6) fed by the generator set (2), for generating additional cold or heat from the electricity generated by the generator set (2), and which is connected to the local climate control circuit (5) for supplying heat or cold for the purpose of climate control and of feeding the other thermal receivers,
- a photovoltaic generator (7) connected to the local electrical energy distribution network (3), and
- a control unit (8) associated with electrical load and temperature sensors (9) and with connection elements (100) for managing the operation of the generator set (2), heat pump (6) and feed coming from the photovoltaic generator (7) depending on the simultaneous requirements of the local electrical loads (14) connected to the local climate control and electrical energy distribution network (3) of the premises (15) and on the needs of the thermal receivers connected to the local climate control circuit (5). Said control unit (8) is associated with said elements through a control bus (80).

The heat pump (6) is very preferably associated with a first heated water accumulator tank (61) and with a second cooled water accumulator tank (62) for accumulating cold and heat generated during peak solar production hours for harnessing said accumulated cold or heat depending on the demand. Said accumulator tanks (61, 62) are connected to the local climate control circuit (5) for distributing said cold or heat throughout the premises (15).

The invention has additionally envisaged that the system (1) may comprise a heat absorption chiller (18) absorbing heat coming from the heat recovery unit (4), for producing cold by absorption, and which is connected to the local climate control circuit (5) for supplying cold for the purpose of climate control, where a first chilling may be performed before starting up the heat pump (6).

The local climate control circuit (5) comprises a hot water climate control circuit (51) and a cold water climate control circuit (52) for feeding thermal receivers made up of exchangers (19) (fan-coils, radiators, etc.) which will heat or cool the premises (15).

In turn, the local electrical loads may optionally comprise at least one Joule effect domestic hot water heater, not depicted, for obtaining hot water from the system. Likewise, just like the other thermal receivers of the system (1), one or more heat exchange heaters (20) (provided with a water/water exchanger therein) can be used for obtaining domestic hot water or for heating water for a radiant floor or ceiling installation, originating fewer losses due to transport in hot water circulation.

With regard to the photovoltaic generator (7), it will usually comprise photovoltaic panels (10), electrical energy accumulators (11), and an inverter/charger (12) (for charging the accumulators (11) with the generator set (2) and preventing same from starting up at night) and for being connected to the local electrical energy distribution network (3), since it will normally operate with alternating current.

The heat pump (6) preferably has a COP index of 3 or higher for maximising the advantages of the system.

The method for operating the system (1) comprises the following steps implemented in a control unit (8):
- continuously monitoring the local demands for electrical energy of local electrical loads (14) (power plugs, lighting, Joule effect water heater, etc.) connected to a local electrical energy distribution network (3) and for thermal energy for climate control of premises (15) or rooms belonging to local users (homes, hotels, shops, etc.), through a local climate control circuit (5) or for the supply to thermal receivers associated with said premises (15), by means of sensors (9) connected to said control unit (8),
- connecting a photovoltaic generator (7) to the local electrical energy distribution network (3) for first supplying electrical energy to cover the demand for electrical energy detected,
- starting up a generator set (2) in the event of the control unit (8) detecting that the demand for electrical energy detected cannot be covered with the energy supplied from said photovoltaic generator (7), connecting said generator set (2) to the local distribution network (3), and feeding said generator set (2) for generating enough energy to cover the demand detected and not covered by the photovoltaic generator (7),

- determining if there is a demand for cold or for heat,
- in the event of a demand for cold, feeding a heat pump (6), connectable to a local climate control circuit (5) for supplying heat or cold to the premises (15) for the purpose of climate control, from the photovoltaic generator (7), and also from the generator set (2) in the event that the energy supplied from the photovoltaic generator (7) is not enough for said heat pump (6) to generate the cold needed to cover said demand for cold,
- in the event of a demand for heat, feeding the heat pump (6) from the photovoltaic generator (7), and
- in the event that the energy supplied from the photovoltaic generator (7) is not enough, connecting the generator set (2), after the startup thereof, where appropriate, to the heat pump (6), recovering heat for climate control through a heat recovery unit (4) coupled to the generator set (2) and connected to the local climate control circuit (5) and to the thermal receivers, and feeding the generator set (2) to the extent that is sufficient to cover the demand for electrical energy for the heat pump (6) to generate the heat demanded minus the heat recovered by the heat recovery unit (4).

In the event of a demand for cold, the method may comprise an additional sub-step, prior to feeding the heat pump (6), of feeding an adiabatic heat absorption chiller (18), etc., connected to the local climate control circuit (5) from the heat recovery unit (4), feeding the heat pump (6) to the extent that is sufficient for generating the cold not covered by the heat absorption chiller (18).

In the event of detecting that the charge level in the accumulators (11) of the photovoltaic generator (7) is below the maximum, a sub-step can be included in the method, according to which if the generator set (2) is operating, the latter will be fed to the extent that is sufficient to cover, in addition to the demand it may have for other purposes, recharging the accumulators (11) through the inverter/charger (12), and the control unit (8) will make the appropriate connection for performing said recharging.

Having sufficiently described the nature of the invention, it is hereby indicated that the description of same and of its preferred embodiment must be interpreted in a non-limiting manner, and it covers all the possible embodiment variants that may ensue from the content of the present specification and claims.

## Claims

1. A local system (1) for energy production and management, of the type applied to a consumer or non-industrial consumer association; **characterised in that** it comprises:
- at least one generator set (2) for supplying electrical energy, connected to a local electrical energy distribution network (3) for supplying to local electrical loads (14) belonging to the premises (15) of the consumer or consumer association,
- a heat recovery unit (4) coupled to the generator set (2), and connected to a local climate control circuit (5) for supplying recovered heat for the purpose of climate control of the premises (15) and of feeding other thermal receivers associated with said premises,
- at least one electric heat pump (6) fed by the generator set (2), for generating additional cold or heat from the electricity generated by the generator set (2), and connected to the local climate control circuit (5) for supplying heat or cold for the purpose of climate control of the premises (15) and of feeding other thermal receivers associated with said premises (15),
- a photovoltaic generator (7) connected to the local electrical energy distribution network (3), and
- a control unit (8) associated with electrical load and temperature sensors (9) and with connection elements (100) (such as stopcocks or pumps) for managing the operation of the generator set (2), heat pump (6) and feed coming from the photovoltaic generator (7) depending on the simultaneous requirements of the local electrical loads (14) connected to the local climate control and electrical energy distribution network (3) of the premises (15) and on the needs of the thermal receivers connected to the local climate control circuit (5).

2. The local system (1) for energy production and management according to claim 1, **characterised in that** the heat pump (6) is associated with a first heated water accumulator tank (61) and with a second cooled water accumulator tank (62) for accumulating cold and heat generated during peak solar production hours for harnessing said accumulated cold or heat depending on the demand.

3. The local system (1) for energy production and management according to claim 1 or 2, **characterised in that** it additionally comprises a heat absorption chiller (18) absorbing heat coming from the heat recovery unit (4) for producing cold by absorption and which is connected to the local climate control circuit (5) for supplying cold.

4. The local system (1) for energy production and management according to any of the preceding claims, **characterised in that** the local climate control circuit (5) comprises a hot water climate control circuit (51) and a cold water climate control circuit (52) for feeding thermal receivers made up of exchangers (19).

5. The local system (1) for energy production and management according to any of the preceding claims, **characterised in that** the thermal receivers comprise at least one heat exchange hot water heater (20).

6. The local system (1) for energy production and management according to any of the preceding claims, **characterised in that** the local electrical loads comprise at least one Joule effect domestic hot water heater.

7. The local system (1) for energy production and management according to any of the preceding claims, **characterised in that** the photovoltaic generator (7) comprises photovoltaic panels (10), electrical energy accumulators (11), and an inverter/charger (12) for being connected to the domestic electrical energy distribution network.

8. The local system (1) for energy production and management according to any of the preceding claims, **characterised in that** the heat pump (6) has a COP index of 3 or higher.

9. A method for operating a local system (1) for energy production and management, **characterised in that** it comprises the following steps implemented in a control unit (8):
- continuously monitoring the local demands for electrical energy of local electrical loads (14) connected to a local electrical energy distribution network (3), and for thermal energy for climate control of premises (15) through a local climate control circuit (5) or for the supply to thermal receivers associated with said premises (15), by means of sensors (9) connected to said control unit (8),
- connecting a photovoltaic generator (7) to the local electrical energy distribution network (3) for first supplying electrical energy to cover the demand for electrical energy detected,
- starting up a generator set (2) in the event of the control unit (8) detecting that the demand for electrical energy cannot be covered with the energy supplied from said photovoltaic generator (7), connecting said generator set (2) to the local distribution network (3), and feeding said generator set (2) for generating enough energy to cover the demand detected and not covered by the photovoltaic generator (7),
- determining if there is a demand for cold or for heat,
- in the event of a demand for cold, feeding a heat pump (6), connectable to a local climate control circuit (5) for supplying heat or cold to the premises (15) for the purpose of climate control, from the photovoltaic generator (7), and also from the generator set (2) in the event that the energy supplied from the photovoltaic generator (7) is not enough for said heat pump (6) to generate the cold needed to cover said demand for cold,
- in the event of a demand for heat, feeding the heat pump (6) from the photovoltaic generator (7), and
- in the event that the energy supplied from the photovoltaic generator (7) is not enough, connecting the generator set (2), after the startup thereof, where appropriate, to the heat pump (6), recovering heat for climate control through a heat recovery unit (4) coupled to the generator set (2) and connected to the local climate control circuit (5) and to the thermal receivers, and feeding the generator set (2) to the extent that is sufficient to cover the demand for electrical energy for the heat pump (6) to generate the heat demanded minus the heat recovered by the heat recovery unit (4).

10. The method for operating a local system (1) for energy production and management according to claim 9, **characterised in that** in the event of a demand for cold, it comprises an additional sub-step, prior to feeding the heat pump (6), of feeding a heat absorption chiller (18) connected to the local climate control circuit (5) absorbing heat from the heat recovery unit (4), feeding the heat pump (6) to the extent that is sufficient for generating the cold not covered by the heat absorption chiller (18).

11. The method for operating a local system (1) for energy production and management according to claim 9 or 10, **characterised in that** it comprises a sub-step of recharging the accumulators (11) of the photovoltaic generator (7) if their charge level is below the maximum and if the generator set (2) is operating, which comprises feeding said generator set (2) to the extent that is sufficient to cover the demand it may have for other purposes and the demand needed for recharging the accumulators (11) through the inverter/charger (12), and the control unit (8) making the appropriate connection for performing said recharging.
